# FASCICULE DE BREVET EUROPEEN

(11) **EP 1 672 227 B1**
(45) Date de publication et mention de la délivrance du brevet: **13.02.2008**
(21) Numéro de dépôt: 05292635.9
(22) Date de dépôt: 12.12.2005
(51) Int. Cl.: F16B 5/07, B23Q 16/08

(54) **Dispositif mécanique comprenant plusieurs pièces assemblées avec un positionnement relatif précis**
Mechanische Vorrichtung mit mehreren, in relativ präziser Position zusammengesetzten Teilen
Mechanical device comprising several pieces assembled in relatively precise positions

(30) Priorité: 16.12.2004 FR 0413388
(43) Date de publication de la demande: 21.06.2006
(73) Titulaire: SNECMA, 75015 Paris (FR)
(72) Inventeur: Bouru, Michel André, 77950 Montereau sur le Jard (FR)
(74) Mandataire: Barbin le Bourhis, Joël

(56) Documents cités:
- EP-A- 0 263 587
- FR-A- 2 373 311
- US-A- 5 715 643

## Description

L'invention concerne un dispositif mécanique quelconque comprenant un assemblage de plusieurs pièces fixes les unes par rapport aux autres et nécessitant un positionnement relatif précis desdites pièces, afin de reconstituer un ensemble mécanique de forme complexe qui serait difficile à réaliser par moulage et/ou usinage en une seule pièce. L'invention permet un positionnement immédiat et parfaitement précis des pièces assemblées, pouvant être répété avec la même facilité, précision et fiabilité si les pièces doivent être démontées puis remontées. Un dispositif selon le préambule de la revendication 1 est connu du document FR-A-2 373 311.

Pour assembler rapidement deux pièces de façon précise et répétitive, on connaît plusieurs solutions qui nécessitent l'adjonction de composants annexes. Par exemple, on peut utiliser des goupilles coniques. Les logements de ces goupilles doivent être pratiqués en une seule opération sur les deux pièces assemblées de façon précise par des moyens mécaniques spécifiques, ce qui nécessite un montage d'outillage plus ou moins complexe suivant la nature des pièces à assembler. Une fois l'opération réalisée les goupilles coniques permettent de retrouver à chaque opération de montage, un positionnement rigoureusement identique des deux pièces à assembler.

Les perçages coniques peuvent fragiliser les pièces à assembler, particulièrement si celles-ci sont de faibles dimensions. D'autres part, les goupilles coniques peuvent être perdues lors des opérations de démontage-remontage.

Une autre solution consiste à réaliser un indexage par des pions cylindriques implantés à force dans l'une des pièces à assembler et venant se positionner à frottement doux dans des alésages correspondants de l'autre pièce.

Les risques de fragilisation demeurent et les opérations d'usinage et d'ajustement sont relativement complexes. De plus, la qualité de positionnement des deux pièces dépend du jeu d'ajustement du pion dans l'alésage qui le reçoit.

Dans tous les cas, il est extrêmement difficile de « partager » un ensemble de forme complexe et de relativement faibles dimensions en un certain nombre de pièces plus simples positionnées les unes par rapport aux autres, en raison de la multiplication des perçages que cela entraînerait.

L'invention permet de résoudre ces problèmes. L'idée de base de l'invention consiste à pratiquer (usiner) les moyens de positionnement dans les pièces elles-mêmes, de façon à éliminer tout élément de positionnement rapporté.

Plus précisément, l'invention concerne un dispositif mécanique comprenant un assemblage de plusieurs pièces fixes les unes par rapport aux autres, nécessitant un positionnement relatif précis, caractérisé en ce qu'au moins une pièce comporte deux nervures en chevron et en ce qu'au moins une autre pièce comporte deux rainures en chevron, de formes complémentaires et de dimensions correspondantes, lesdites pièces venant se positionner l'une par rapport à l'autre au montage par emboîtement desdites nervures et rainures en chevron.

Avantageusement, lesdites nervures et rainures ont un profil en V.

Les rainures et nervures peuvent être usinées avec une très grande précision en mettant en oeuvre les machines d'usinage à commande numérique modernes. Elles .peuvent aussi être obtenues en mettant en oeuvre un équipement traditionnel plus simple à condition de réaliser les rainures et nervures sur les deux pièces à assembler au cours d'une même série d'opérations d'usinage (fraisage) appliquée aux deux pièces installées sur la machine, sans les démonter.

L'invention sera mieux comprise et d'autres avantages de celle-ci apparaîtront plus clairement à la lumière de la description qui va suivre donnée uniquement à titre d'exemple et faite en référence aux dessins annexés dans lesquels :
- la figure 1 représente un dispositif mécanique de forme relativement complexe réalisé par l'assemblage de quatre pièces positionnées les unes par rapport aux autres conformément au principe de l'invention, le dispositif étant représenté en perspective éclatée ;
- la figure 2 représente deux des pièces de la figure 1 sous un autre angle pour visualiser d'autres faces de celle-ci ; et
- la figure 3 illustre une phase d'usinage de l'une des pièces de la figure 1.

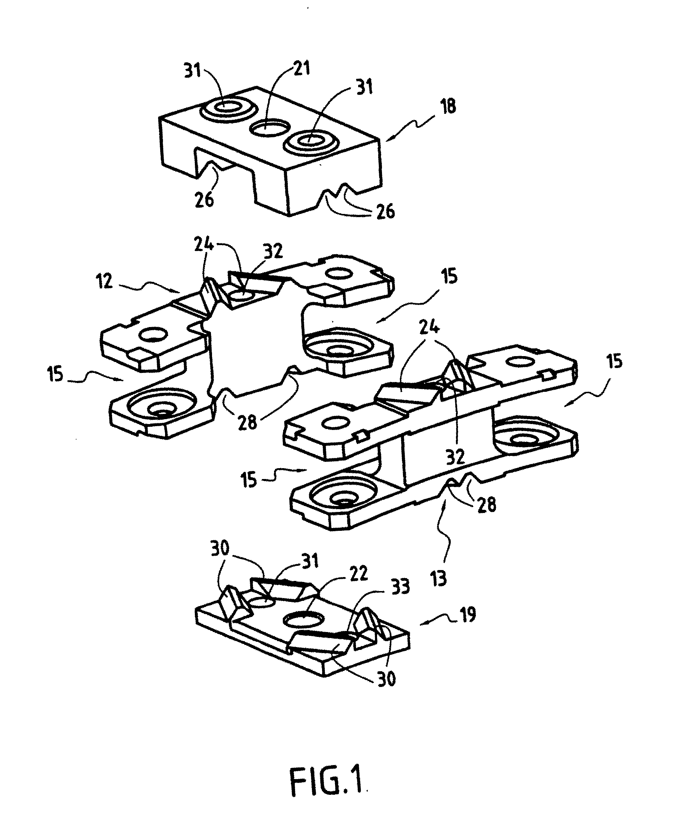

Le dispositif mécanique représenté sur la figure 1 est destiné à constituer une sorte d'équipage mobile portant des galets et recevant un axe cylindrique. Les galets et l'axe ne sont pas représentés. Les galets sont montés en chape. L'axe doit passer au centre dudit équipage mobile.

Pour réaliser un tel dispositif, on l'a partagé en quatre pièces destinées à être assemblées les unes par rapport aux autres en mettant en oeuvre des moyens de positionnement conformes au principe de l'invention. On distingue deux pièces longitudinales 12, 13 symétriques, comportant chacune deux chapes 15 destinées à recevoir deux galets. Au total, le dispositif accueille quatre galets portés par les deux pièces longitudinales. Celles-ci sont maintenues parallèlement l'une à l'autre par deux pièces transversales 18, 19. La forme et les dimensions de ces pièces transversales sont telles que, après assemblage, les deux pièces longitudinales sont maintenues écartées l'une de l'autre, ce qui dégage un espace pour le passage de l'axe, lequel est maintenu entre deux perçages 21, 22 chacun étant pratiqué au centre d'une transversale.

Conformément à l'invention, chaque pièce transversale 18, 19 est positionnée par rapport à une pièce longitudinale 12, 13 par un système de rainures et nervures en chevron. Ainsi, la pièce longitudinale 12 comporte sur sa face supérieure (en considérant la figure 1) deux nervures 24 en chevron qui coopèrent avec deux rainures 26 en chevron de formes complémentaires et de dimensions correspondantes, pratiquées à la face inférieure de la pièce transversale 18. Le montage est le même entre l'autre pièce longitudinale 13 et la pièce transversale 18.

Par ailleurs, les faces inférieures des deux pièces longitudinales 12, 13 sont munies de rainures 28 en chevron qui coopèrent avec des nervures 30 en chevron pratiquées à la face supérieure de la pièce transversale inférieure.

Ainsi, toutes les pièces viennent se positionner les unes par rapport aux autres au montage par simple emboîtement des nervures et rainures en chevron décrites ci-dessus. Comme représenté, les nervures et les rainures ont un profil en V. De plus, les nervures et rainures constituant un même chevron font entre elles un angle prédéterminé qui peut être choisi en fonction de la géométrie des pièces à assembler. En pratique, cet angle sera de préférence compris entre 40 et 140°. Un angle voisin de 90° est mécaniquement recommandé.

Les quatre pièces comportent des perçages 31, 32 33 s'étendant entre les chevrons. Ces perçages s'alignent au montage pour définir deux passages de boulons. Cependant, il est clair que les boulons ne participent pas au positionnement relatif des pièces, lequel est dévolu aux seuls chevrons.

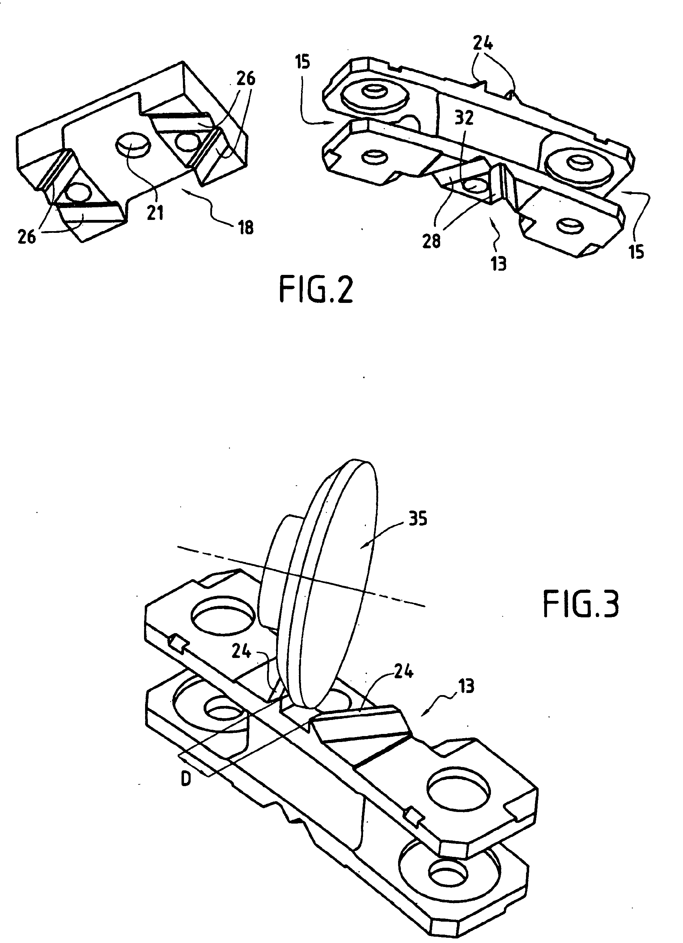

Comme le montre la figure 3, les extrémités les plus rapprochées des nervures (ou rainures) définissant un même chevron sont espacées d'une distance D suffisante pour permettre le dégagement de l'outil 35.

## Revendications

1. Dispositif mécanique comprenant un assemblage de plusieurs pièces fixes les unes par rapport aux autres, nécessitant un positionnement relatif précis, **caractérisé en ce qu**'au moins une pièce (12, 13, 18, 19) comporte deux nervures (24, 30) en chevron et en ce qu'au moins une autre pièce comporte deux rainures (26, 28) en chevron, de formes complémentaires et de dimensions correspondantes, lesdites pièces venant se positionner l'une par rapport à l'autre au montage par emboîtement desdites nervures et rainures en chevron.

2. Dispositif selon la revendication 1, **caractérisé en ce que** lesdites nervures et rainures ont un profil en V.

3. Dispositif selon la revendication 1 ou 2, **caractérisé en ce que** lesdites nervures et rainures constituant un même chevron font entre elles un angle prédéterminé choisi 40 et 140°.

## Claims

1. A mechanical device comprising an assembly of a plurality of parts that are fastened to one another and that need to be accurately positioned relative to one another, the device being **characterised in that** at least one of the parts (12, 13, 18, 19) includes two ribs (24, 30) in a chevron configuration and **in that** at least one other part includes two grooves (26, 28) in a chevron configuration, the ribs and the grooves being of complementary shapes and of corresponding dimensions, said parts becoming positioned one relative to another on assembly by mutual engagement of said ribs and grooves of chevron configuration engaging mutually.

2. A device according to claim 1, **characterised in that** said ribs and grooves are of V-section.

3. A device according to claim 1 or claim 2, **characterised in that** said ribs and grooves constituting any one chevron form a predetermined angle between each other lying in the range 40° to 140°.

## Patentansprüche

1. Mechanische Vorrichtung mit einer Verbindung aus mehreren zueinander festen Teilen, die eine präzise Relativpositionierung erfordern, **dadurch gekennzeichnet, daß** wenigstens ein Teil (12, 13, 18, 19) zwei pfeilspitzenförmig angeordnete Rippen (24, 30) aufweist und daß wenigstens ein weiteres Teil zwei pfeilspitzenförmig angeordnete Nuten (26, 28) mit ergänzenden Formen und entsprechende Abmessungen aufweist, wobei sich die Teile bei der Montage durch Ineinanderstecken der pfeilspitzenförmig angeordneten Rippen und Nuten zueinander positionieren.

2. Vorrichtung nach Anspruch 1, **dadurch gekennzeichnet, daß** die Rippen und Nuten ein V-förmiges Profil aufweisen.

3. Vorrichtung nach Anspruch 1 oder 2, **dadurch gekennzeichnet, daß** die Rippen und Nuten, die eine gleiche Pfeilspitze bilden, zwischen sich einen vorbestimmten, zwischen 40 und 140° gewählten Winkel bilden.
